# EUROPÄISCHE PATENTANMELDUNG

(11) **EP 3 348 466 A1**
(43) Veröffentlichungstag der Anmeldung: **18.07.2018**
(21) Anmeldenummer: 18151384.7
(22) Anmeldetag: 12.01.2018
(51) Int. Cl.: B62L 5/10, B62K 5/02, B62M 9/02, F16D 41/24, F16D 67/02

(54) **VORRICHTUNG ZUR ÄNDERUNG VON BEWEGUNGSGRÖSSEN FÜR EIN MUSKELKRAFTBETRIEBENES FAHRZEUG**

(30) Priorität: 12.01.2017 DE 202017100145 U
(71) Anmelder: Gerdes, Clemens, 49733 Haren/Ems (DE); Evers, Theodor Hermann, 26899 Rhede (DE)
(72) Erfinder: Die Erfindernennung liegt noch nicht vor
(74) Vertreter: Jabbusch, Matthias

(57) **Zusammenfassung**

Bei einer Vorrichtung zur Änderung von Bewegungsgrößen für ein muskelkraftbetriebenes Fahrzeug, insbesondere ein Fahrzeug mit einem Tretkurbelantrieb, aufweisend wenigstens eine antriebsseitige Kraftübertragungseinheit und ein Getriebegehäuse ist vorgesehen, dass das Getriebegehäuse eine Achsdurchführung aufweist, mit der dieses konzentrisch auf einer Antriebsachse eines Fahrzeugs festlegbar ist, dass innerhalb des Getriebegehäuses eine Schaltmechanik angeordnet ist, dass die Schaltmechanik um die Achsdurchführung drehbar in dem Getriebegehäuse gelagert ist, dass wenigstens ein Teil der Schaltmechanik in Achsrichtung verschiebbar gelagert ist, dass die antriebsseitige Kraftübertragungseinheit einen Teil der Schaltmechanik darstellt, dass die Schaltmechanik in eine Drehrichtung der Kraftübertragungseinheit um die Achsdurchführung einseitig wirkende Mitnehmer aufweist, und dass in Abhängigkeit von der Drehrichtung der antriebsseitigen Kraftübertragungseinheit um die Achsdurchführung die Mitnehmer in Aufnahmen des Getriebegehäuses eingreifen oder ein Bremsmantel-Steuerflansch von der antriebsseitigen Kraftübertragungseinheit abdrückbar ist, wobei durch Abdrücken des Bremsmantel-Steuerflansches von der Kraftübertragungseinheit eine Bewegungsgrößenänderung des Fahrzeuges erfolgt.

## Beschreibung

Die Erfindung betrifft eine Vorrichtung zur Änderung von Bewegungsgrößen für ein muskelkraftbetriebenes Fahrzeug, insbesondere ein Fahrzeug mit einem Tretkurbelantrieb, aufweisend wenigstens eine antriebsseitige Kraftübertragungseinheit und ein Getriebegehäuse.

Tretkurbelantriebe für muskelkraftbetriebene Fahrzeuge sind vor allem bei Kinderfahrzeugen beziehungsweise Kinderspielzeug verbreitet. Zum Teil handelt es sich dabei um Ausführungen von Tretkurbelantrieben, bei denen eine Kraftübertragung direkt über eine zwischen Tretkurbel und Antriebsachse gespannte Antriebskette erfolgt. Bewegungen des Tretkurbelantriebs werden dann direkt in eine Fahrzeugbewegung umgesetzt, wobei eine Änderung der Tretrichtung zugleich eine Fahrtrichtungsänderung bedingt.

Vorrichtungen beziehungsweise Getriebe, die weitergehende Änderungen von Bewegungsgrößen ermöglichen, sind bei solchen Kinderfahrzeugen zumeist einfach aufgebaut. Diese Getriebe können unter anderem einen Freilauf oder auch verschiedene Gänge beinhalten. Um möglichst geringe Kosten und wenig Aufwand bei der Entwicklung der Getriebe zu haben, werden dabei auch Getriebe, die ursprünglich für andere Fahrzeuge, beispielsweise Fahrräder, konstruiert wurden, verwendet. Die Verwendung von beispielsweise einer Fahrradnabe mit Getriebe für ein Kinderfahrzeug mit Tretkurbelantrieb erfordert dann je nach Bauart der Fahrradnabe jedoch größere Anpassungen, was unter anderem zu umständlichen bis behelfsmäßigen Lösungen führen kann. Um die Kraft von der Tretkurbel an die Antriebsachse weiterzuleiten, werden gemäß einer bekannten Ausführung, beispielsweise wenigstens zwei Kettenräder und zwei Antriebsketten benötigt.

Aufgabe der Erfindung ist es ein Getriebe zur Änderung von Bewegungsgrößen, insbesondere für ein Kinderfahrzeug mit Tretkurbelantrieb, bereitzustellen, das einfach konstruiert, kostengünstig herzustellen und sicher im Betrieb ist.

Die Lösung dieser Aufgabe erfolgt mit den Merkmalen des Patentanspruchs 1. Weiterbildungen und vorteilhafte Ausgestaltungen sind in den nachgeordneten Patentansprüchen angegeben.

Die Vorrichtung zur Änderung von Bewegungsgrößen für ein muskelkraftbetriebenes Fahrzeug, insbesondere ein Fahrzeug mit einem Tretkurbelantrieb, aufweisend wenigstens eine antriebsseitige Kraftübertragungseinheit und ein Getriebegehäuse, zeichnet sich erfindungsgemäß dadurch aus, dass das Getriebegehäuse eine Achsdurchführung aufweist, mit der dieses konzentrisch auf einer Antriebsachse eines Fahrzeugs festlegbar ist, dass innerhalb des Getriebegehäuses eine Schaltmechanik angeordnet ist, dass die Schaltmechanik um die Achsdurchführung drehbar in dem Getriebegehäuse gelagert ist, dass wenigstens ein Teil der Schaltmechanik in Achsrichtung verschiebbar gelagert ist, dass die antriebsseitige Kraftübertragungseinheit einen Teil der Schaltmechanik darstellt, dass die Schaltmechanik in eine Drehrichtung der Kraftübertragungseinheit um die Achsdurchführung einseitig wirkende Mitnehmer aufweist, und dass in Abhängigkeit von der Drehrichtung der antriebsseitigen Kraftübertragungseinheit um die Achsdurchführung die Mitnehmer in Aufnahmen des Getriebegehäuses eingreifen oder ein Bremsmantel-Steuerflansch von der antriebsseitigen Kraftübertragungseinheit abdrückbar ist, wobei durch Abdrücken des Bremsmantel-Steuerflansches von der Kraftübertragungseinheit eine Bewegungsgrößenänderung des Fahrzeuges erfolgt.

Indem die Vorrichtung mit der Achsdurchführung direkt auf einer Antriebsachse des Fahrzeugs anordbar ist, ist einerseits eine kompakte Bauweise unmittelbar an der Antriebsachse des jeweiligen Fahrzeugs ermöglicht und andererseits erreicht, dass zwischen der Antriebsachse und der Tretkurbel nur ein Kraftübertragungsmittel vorzusehen ist. Zudem ist durch das Zusammenspiel der Bauteile der erfindungsgemäßen Vorrichtung jeweils ein Vorwärtsgang und ein Rückwärtsgang, ein Freilauf und eine Bremsfunktion miteinander kombiniert.

Während Vortrieb im Vorwärtsgang erreicht wird, indem die Mitnehmer in die Aufnahmen des Getriebegehäuses eingreifen und dadurch das an der Antriebsachse festgelegte Getriebegehäuse zusammen mit der Antriebsachse in Drehung versetzen, wird Bremsen und Rückwärtsfahren ermöglicht, indem die Drehrichtung der Kraftübertragungseinheit geändert, insbesondere umgekehrt, wird. Durch das Umkehren der Drehrichtung greifen die einseitig wirkenden Mitnehmer nicht mehr in die Aufnahmen des Getriebegehäuses und der Bremsmantel-Steuerflansch wird von der antriebsseitigen Kraftübertragungseinheit weggedrückt. Das Wegdrücken des Bremsmantel-Steuerflansches führt zunächst zu einer Blockierung der Drehbewegung des Getriebegehäuses und einer damit verbundenen Antriebsachse entsprechend einer Rücktrittbremse. Wenn die Kraftübertragungseinheit jetzt weiter in die gleiche Drehrichtung bewegt wird, wird das blockierte Getriebegehäuse zusammen mit dem Bremsmantel-Steuerflansch in Drehrichtung der Kraftübertragungseinheit mitgenommen, wodurch die fest mit dem Getriebegehäuse verbundenen Antriebsachse rückwärts beschleunigt wird. Die Änderung von Bewegungsgrößen wird damit allein durch eine Änderung der Drehrichtung der Kraftübertragungseinheit der Vorrichtung, insbesondere eine Änderung der Drehrichtung, der vorteilhafterweise direkt auf die Kraftübertragungseinheit wirkenden Tretkurbel, erreicht.

Dem Bremsmantel-Steuerflansch kann hierzu wenigstens eine Bremsbacke zugeordnet sein, die beim Abdrücken von einer Bremsbacken-Auflagefläche des Bremsmantel-Steuerflansches gegen das innenseitig wenigstens abschnittsweise eine Bremstrommel ausbildende Getriebegehäuse gedrückt wird. Die durch den Bremsmantel-Steuerflansch bewirkte Blockierung des Getriebegehäuses ist damit auf einfache Weise umgesetzt, indem die Bremsbacke innenseitig gegen das Getriebegehäuse gedrückt wird. Kraftübertragungseinheit, Bremsmantel-Steuerflansch, Bremsbacke und Getriebegehäuse bilden dann eine starre Verbindung aus, über die die auf die Kraftübertragungseinheit wirkende Kraft weitergeleitet, insbesondere direkt weitergeleitet, wird.

Um eine sichere Führung der Bremsbacke beim Andrücken an die Bremstrommel zu gewährleisten, kann die Bremsbacken-Auflagefläche des Bremsmantel-Steuerflansches vorteilhafterweise konisch geformt sein. Beim Bremsen auf die Bremsbacke einwirkende Kräfte werden so auf einfache Weise gleichmäßig verteilt.

Die Bremsbacke kann in weiterer Ausgestaltung ringförmig ausgebildet sein und einen Innendurchmesser aufweisen, der kleiner ist als die konisch geformte Bremsbacken-Auflagefläche an deren größtem Umfang. Durch den größeren Umfang der Bremsbacken-Auflagefläche ist sichergestellt, dass der Bremsmantel-Steuerflansch beim Abdrücken von der Kraftübertragungseinheit immer gegen die Bremsbacke drückt und sicher eine Bremsung des Fahrzeugs eingeleitet wird. Weiter ist der kleinste Umfang der konisch geformten Bremsbacken-Auflagefläche vorteilhafterweise kleiner als der Innendurchmesser der ringförmigen Bremsbacke, so dass die Bremsbacke jederzeit auf der Bremsbacken-Auflagefläche aufliegt und beim Bremsen lediglich eine Verschiebung der Bremsbacke auf der Bremsbacken-Auflagefläche erfolgt.

Vorteilhafterweise ist die Schaltmechanik von einer Drehbewegung einer Antriebsachse, auf der die Vorrichtung anordbar ist, entkoppelt, um die Kraftübertragungseinheit und den Bremsmantel-Steuerflansch unabhängig von der Drehbewegung der Antriebsachse bewegen zu können. Hierzu kann einerseits vorgesehen sein, dass die antriebsseitige Kraftübertragungseinheit auf einer Nadelhülse gelagert ist. Andererseits kann auch der Bremsmantel-Steuerflansch auf einer Nadelhülse gelagert sein. Diese entkoppelte Lagerung der Schaltmechanik stellt sicher, dass auf die Kraftübertragungseinheit wirkende Kraft immer über das Getriebegehäuse auf eine Antriebsachse übertragen wird.

Nach einer Weiterbildung der Vorrichtung ist innerhalb des Getriebegehäuses eine Freilaufachse gehaltert, die eine zu der Achsdurchführung des Getriebegehäuses fluchtend ausgerichtete Achsdurchführung aufweist. Die Freilaufachse ermöglicht auf einfache Weise ein Zusammensetzen der Vorrichtung ohne eine Antriebsachse eines Fahrzeugs mit einbeziehen zu müssen. Auf der Freilaufachse ist dann vorteilhafterweise die Schaltmechanik gelagert, wobei der Bremsmantel-Steuerflansch und die Kraftübertragungseinheit insbesondere auf die Freilaufachse aufgeschoben und auf dieser beweglich gelagert sind. Die Nadelhülsen könnten dann auf einfache Weise auf der Freilaufachse angeordnet sein.

Die Mitnehmer sind bevorzugt durch Klinken gebildet, die mittels wenigstens einer Klinkenfeder an der Schaltmechanik befestigt sind, insbesondere an einem äußeren Umfang des Bremsmantel-Steuerflansches befestigt sind. Die Klinkenfeder kann dann auf einfache Weise in einer umlaufenden Nut des Bremsmantel-Steuerflansches geführt sein, wobei die Klinken durch die Spannkraft der Klinkenfeder ausgestellt werden, so dass diese in die Aufnahmen des Getriebegehäuses eingreifen können. Die ausgestellten Klinken bilden dabei in einer ersten Drehrichtung der Kraftübertragungseinheit Widerstände während des Vortriebs eines mit der Vorrichtung ausgestatteten Fahrzeugs, die in den Aufnahmen hängen bleiben und das Getriebegehäuse mitnehmen. An deren Rückseite sind die ausgestellten Klinken flach ansteigend ausgebildet, so dass das Getriebegehäuse mit den Aufnahmen in einer zweiten, der ersten Drehrichtung entgegengesetzten Drehrichtung über die Klinken hinweggleitet, ohne dass die Klinken in die Aufnahmen eingreifen.

Zwischen der antriebsseitigen Kraftübertragungseinheit und dem Bremsmantel-Steuerflansch ist nach einer anderen Weiterbildung an deren einander zugewandten Seitenflächen wenigstens eine Kugelbahn vorgesehen. Diese Kugelbahn ermöglicht auf einfache Weise das Abdrücken des Bremsmantel-Steuerflansches von der Kraftübertragungseinheit. Die antriebsseitige Kraftübertragungseinheit und der Bremsmantel-Steuerflansch können dazu in weiterer Ausgestaltung an deren einander zugewandten Seitenflächen jeweils miteinander korrespondierende Ausnehmungen der Kugelbahn aufweisen. Von den miteinander korrespondierenden Ausnehmungen einer Kugelbahn ist dann eine der Kraftübertragungseinheit und eine dem Bremsmantel-Steuerflansch zugeordnet. In den miteinander korrespondierenden Ausnehmungen ist jeweils eine Kugel, insbesondere eine Stahlkugel, geführt.

Die korrespondierenden Ausnehmungen einer Kugelbahn können in weiterer Ausgestaltung gegenläufige Steigungen aufweisen, wobei die Ausnehmungen derart zueinander angeordnet sind, dass diese in einer Endlage mit ihren jeweils tiefsten Bereichen einander gegenüberliegen. An den einander zugewandten Seitenflächen der Kraftübertragungseinheit und des Bremsmantel-Steuerflansches können dazu Endlageanschläge, insbesondere für deren Position in Achsdrehrichtung zueinander, ausgebildet sein. In dieser Endlage ist die Kugel der Kugelbahn zwischen den beiden tiefsten Bereichen aufgenommen, so dass die Kraftübertragungseinheit und der Bremsmantel-Steuerflansch in einer bevorzugten Ausführung mit den einander zugewandten Seitenflächen aneinander anliegen. Ausgehend von dieser Endlage, bei der die tiefsten Bereiche einander gegenüberliegen, können die Ausnehmungen zumindest soweit gegeneinander verschoben werden, dass in dem Bereich, in dem die Kugel gehaltert ist, zunehmend flachere Bereiche gegenüberliegen. Dabei wird der Bremsmantel-Steuerflansch von der Kraftübertragungseinheit wenigstens um das Maß von der Kraftübertragungseinheit weggedrückt, mit dem die Ausnehmungen der Kugelbahn in dem Bereich in dem die Kugel gehaltert ist flacher werden bzw. das der Breite des Kugelabschnitts zwischen den Seitenflächen entspricht. Gemäß einer bevorzugten Ausgestaltung sind zwischen Bremsmantel-Steuerflansch und Kraftübertragungseinheit zwei Kugelbahnen angeordnet. Die Kugeln weisen bevorzugt einen Durchmesser von 5 mm auf.

Um eine Verschiebung der Schaltmechanik in Achsrichtung zu begrenzen und diese in einer bestimmten Position zu sichern, kann die Freilaufachse an einem in Achsrichtung ersten Ende eine flanschartige Verbreiterung und an einem zweiten, dem ersten Ende entgegengesetzten Ende ein Gewinde mit einer Sicherungsmutter aufweisen. Neben der Schaltmechanik kann der Freilaufachse auch ein Gegenhalter zugeordnet sein. Dieser ist bevorzugt ebenso wie die Schaltmechanik auf der Freilaufachse gelagert, das heißt in Achsdrehrichtung beweglich. Indem die Freilaufachse ausgehend von dem zweiten Ende sich in Achsrichtung erstreckende Abflachungen aufweist und der Gegenhalter eine zu den Abflachungen korrespondierende Führung mit einem weiteren Freilauf aufweist, die auf die Freilaufachse vom zweiten Ende her aufgeschoben werden kann, kann der Gegenhalter in einer bestimmten Position zu der restlichen Vorrichtung festgelegt werden. Die Abflachungen erstrecken sich dabei ausgehend vom zweiten Ende bevorzugt zumindest bis zu der Position, an der die Führung des Gegenhalters auf der Freilaufachse festgelegt werden soll. Der Gegenhalter ist dann mit der Sicherungsmutter auf den Abflachungen der Freilaufachse verklemmt.

Vom ersten Ende zum zweiten Ende der Freilaufachse sind dann nacheinander der Bremsmantel-Steuerflansch, die Kraftübertragungseinheit und gegebenenfalls der Gegenhalter auf der Freilaufachse gelagert, wobei gemäß einer bevorzugten Ausführung auch der Bremsmantel-Steuerflansch und die Kraftübertragungseinheit vom zweiten Ende der Freilaufachse auf diese aufgeschoben werden.

An der flanschartigen Verbreiterung der Freilaufachse kann in weiterer Ausgestaltung wenigstens eine Führung für die Bremsbacke ausgebildet sein, die diese in Achsdrehrichtung sichert. Diese Führung kann aus wenigstens einer Vertiefung in der Verbreiterung der Freilaufachse und wenigstens einem in die Vertiefung der Verbreiterung eingreifenden Halter der Bremsbacke gebildet sein.

Nach einer Weiterbildung kann das Getriebegehäuse zweiteilig aufgebaut sein, wobei die beiden Teile des Getriebegehäuses jeweils eine Achsdurchführung aufweisen, die beiderseits an die Enden der Achsdurchführung der Freilaufachse anschließen und über Gewindestifte drehfest mit einer in der Achsdurchführung anordbaren Antriebsachse verbindbar sind. Das Getriebegehäuse muss die Vorrichtung dabei nicht vollständig umschließen. Es ist ausreichend, wenn das Getriebegehäuse zumindest die Bremsbacke und die Mitnehmer umschließt. Entsprechend der bevorzugten Anordnung der Schaltmechanik und gegebenenfalls des Gegenhalters auf der Freilaufachse ist dann der Teil des Getriebegehäuses, der dem ersten Ende der Freilaufachse zugeordnet ist, innenseitig als eine Bremstrommel ausbildet. Der dem ersten Ende der Freilaufachse zugeordnete Teil des Getriebegehäuses umschließt dann wenigstens die Bremsbacke. Weiterhin kann der Teil des Getriebegehäuses, der dem ersten Ende der Freilaufachse zugeordnet ist, die Aufnahmen für die Mitnehmer aufweisen. Insbesondere, wenn die Mitnehmer entsprechend bevorzugter Ausführung dem Bremsmantel-Steuerflansch zugeordnet sind, umschließt der dem ersten Ende der Freilaufachse zugeordnete Teil des Getriebegehäuses neben der Bremsbacke auch den Bremsmantel-Steuerflansch und kann bis an die Kraftübertragungseinheit herangeführt sein.

Um sicherzustellen, dass der Bremsmantel-Steuerflansch von der Kraftübertragungseinheit weggedrückt wird, wenn die Antriebsrichtung, das heißt die Drehrichtung der Kraftübertragungseinheit, umgekehrt wird, kann dem Getriebegehäuse eine Steuerfeder zugeordnet sein, die an den Bremsmantel-Steuerflansch ansetzt. Durch die Steuerfeder ist die Kraftübertragungseinheit dann in Richtung des zweiten Endes der Freilaufachse gedrückt, insbesondere gegen den Gegenhalter gedrückt, so dass die Lage der Kraftübertragungseinheit auf der Freilaufachse in Bezug auf das Getriebegehäuse festgelegt ist und nur der Bremsmantel-Steuerflansch in Achsrichtung verschiebbar, das heißt von der Kraftübertragungseinheit wegbewegbar, ist. Zudem ist durch das Vorsehen des Dichtrings eine Abdichtung des Getriebegehäuses erreicht, insbesondere des dem ersten Ende der Freilaufachse zugeordneten Teils des Getriebegehäuses erreicht. Mitnehmer, Bremstrommel, Bremsbacke und Bremsmantel-Steuerflansch sind dann gegen äußere Verschmutzungen geschützt, was zu einer höheren Betriebssicherheit führt.

Der dem zweiten Ende der Freilaufachse zugeordnete Teil des Getriebegehäuses dient dann nur der Sicherung der Freilaufachse gegen ein Verrutschen auf einer Antriebsachse in Achsrichtung.

Die Kraftübertragungseinheit setzt sich gemäß einer Weiterbildung im Wesentlichen aus einem Kettenrad und einem Kettenradflansch zusammen. In Abhängigkeit von der Art der Kraftübertragung zwischen insbesondere Tretkurbelantrieb und Kraftübertragungseinheit kann diese jedoch auch anders ausgestaltet sein, beispielsweise wenn die Kraftübertragung nicht über eine Antriebskette sondern eine Antriebswelle erfolgt. Bei einer Ausführung mit Kettenradflansch, weist dieser dann bevorzugt die Anlagefläche zu dem Bremsmantel-Steuerflansch auf.

Weiterhin wird auch ein muskelkraftbetriebenes Fahrzeug, insbesondere ein Fahrzeug mit einem Tretkurbelantrieb beansprucht, das die erfindungsgemäße Vorrichtung zur Änderung von Bewegungsgrößen aufweist.

Ein Ausführungsbeispiel der Erfindung ist in der Zeichnung dargestellt. Es zeigen:
- Figur 1:: eine perspektivische Darstellung eines Fahrzeugs mit einer erfindungsgemäßen Vorrichtung;
- Figur 2:: eine perspektivische Darstellung der zusammengesetzten Vorrichtung;
- Figur 3:: eine Explosionsdarstellung der erfindungsgemäßen Vorrichtung; und
- Figur 4:: ein Querschnitt durch die zusammengesetzte Vorrichtung gemäß Figur 3.

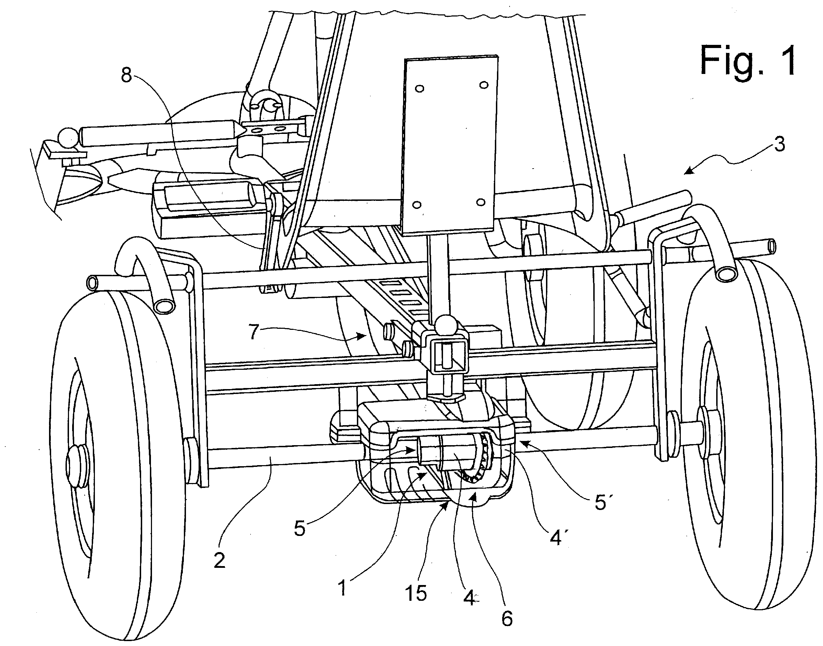

In Figur 1 ist die Anordnung der erfindungsgemäßen Vorrichtung 1 auf einer Antriebsachse 2 eines muskelkraftbetriebenes Fahrzeugs 3 mit Tretkurbelantrieb aufgezeigt. Die Vorrichtung 1 sitzt dabei mit ihrem Gehäuse 4, 4' direkt auf der Antriebsachse 2, wobei die Antriebsachse 2 durch eine Achsdurchführung 5, 5' des Getriebegehäuses 4, 4' geführt ist. Weiter ist eine Kraftübertragungseinheit 6 der Vorrichtung 1 zu sehen, die über eine Antriebskette 7 mit einer Tretkurbel 8 des Fahrzeugs 3 derart verbunden ist, dass Bewegungen der Tretkurbel 8 direkt an die Kraftübertragungseinheit 6 weitergeleitet werden.

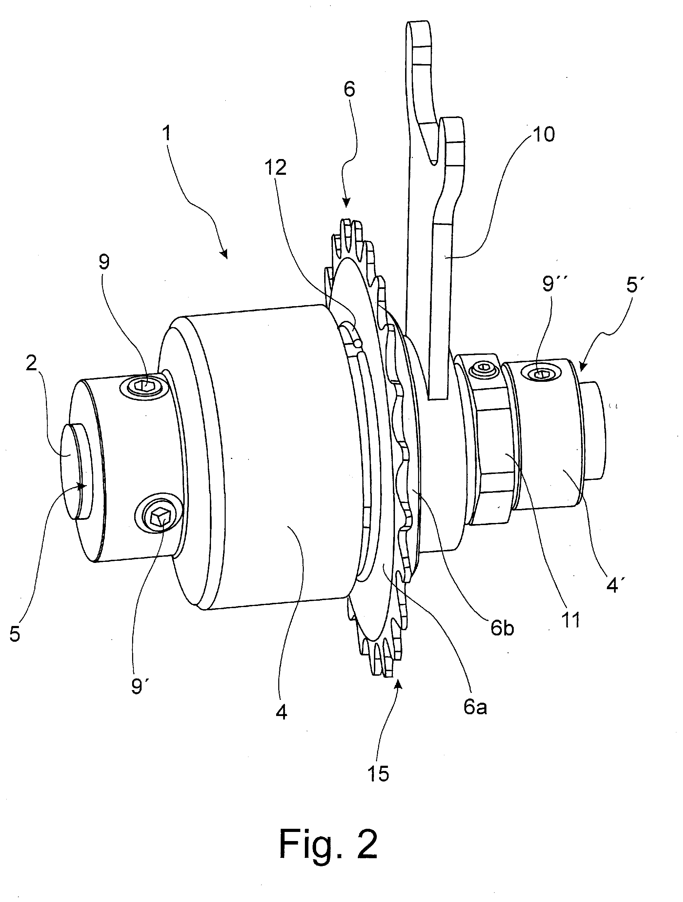

Figur 2 zeigt die Vorrichtung 1 zur Änderung von Bewegungsgrößen, wobei von dem Fahrzeug 3 lediglich die Antriebsachse 2 dargestellt ist. Gleiche Teile sind in allen Figuren mit gleichen Bezugszeichen versehen. Das Getriebegehäuse 4, 4' ist, wie aus Figur 2 weiter hervorgeht, zweiteilig aufgebaut, wobei die Teile des Getriebegehäuses 4, 4' die Vorrichtung 1 zu beiden Enden der Antriebsachse 2 hin begrenzen. Beide Gehäuseteile 4, 4' sind mit Gewindestiften 9, 9', 9" jeweils an der Antriebsachse 2 festgelegt. Alle weiteren Teile der Vorrichtung 1 sind zwischen den beiden Teilen des Getriebegehäuses 4, 4' gehalten, wobei aus der Darstellung in Figur 2 lediglich die Kraftübertragungseinheit 6, aufweisend ein Kettenrad 6a, einen Kettenradflansch 6b und einen Zahnkranzsprengring 12, ein Gegenhalter 10 sowie eine Sicherungsmutter 11 ersichtlich sind.

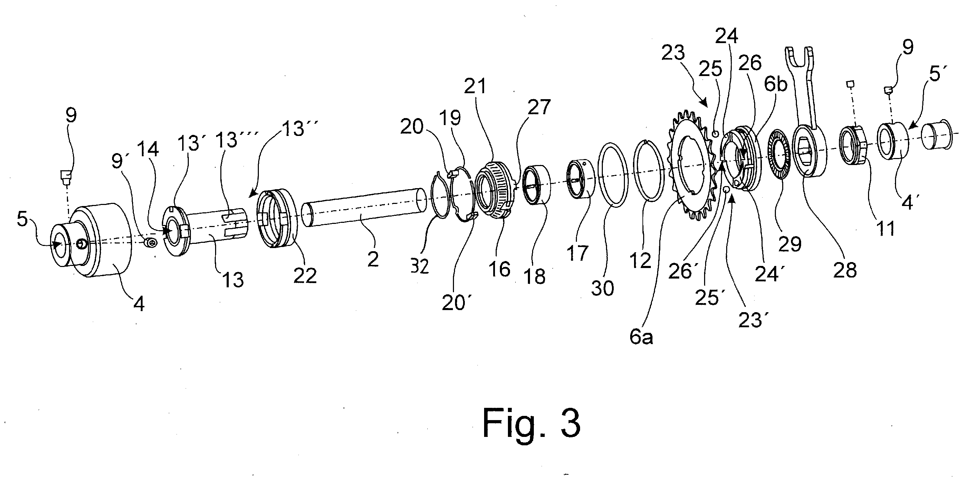

Eine Darstellung aller Teile der Vorrichtung 1 ergibt sich aus Figur 3. Zwischen den beiden Teilen des Getriebegehäuses 4, 4' ist eine Freilaufachse 13 gehaltert, welche eine mit der Achsdurchführung 5, 5' des Getriebegehäuses 4, 4' fluchtende Achsdurchführung 14 aufweist. Die Freilaufachse 13 weist an einem ersten Ende eine flanschartige Verbreiterung 13' auf und an einem zweiten, dem ersten Ende entgegengesetzten Ende ein Gewinde 13" auf, auf das die Sicherungsmutter 11 aufschraubbar ist. Weiter weist die Freilaufachse 13 an dem Ende mit dem Gewinde 13" Abflachungen 13"' auf. Auf die Freilaufachse 13 ist eine Schaltmechanik 15 aufschiebbar, die sich aus der Kraftübertragungseinheit 6 und einem Bremsmantel-Steuerflansch 16 zusammensetzt. Sowohl die Kraftübertragungseinheit 6 als auch der Bremsmantel-Steuerflansch 16 sind dabei jeweils über eine Nadelhülse 17, 18 beweglich auf der Freilaufachse 13 gelagert.

Der Aufbau der Kraftübertragungseinheit 6 setzt sich aus dem Kettenrad 6a, dem Kettenradflansch 6b, an dem das Kettenrad 6a mit dem Zahnkranzsprengring 12 befestigt ist, sowie der Nadelhülse 17, auf der der Kettenradflansch 6b gelagert ist, zusammen. An dem Bremsmantel-Steuerflansch 16, der auf der Nadelhülse 18 gelagert ist, ist eine Klinkenfeder 19 befestigbar, die einander gegenüberliegend zwei Klinken 20, 20' aufweist. Zur Befestigung der Klinkenfeder 19 weist der Bremsmantel-Steuerflansch 16 eine umlaufende Nut auf, in die die Klinkenfeder 19 bei zusammengesetzter Vorrichtung 1 eingreift. Weiter weist der Bremsmantel-Steuerflansch 16 eine konisch geformte Bremsbacken-Auflagefläche 21 auf, der bei zusammengesetzter Vorrichtung 1 eine ringförmige Bremsbacke 22 zugeordnet ist. Zudem ist an dem Bremsmantel-Steuerflansch 16 eine Steuerfeder 32 befestigt, die bei zusammengesetzter Vorrichtung mit einem Vorsprung in die Bremsbacke 22 eingreift.

Um den Bremsmantel-Steuerflansch 16 von dem Kettenradflansch 6b wegdrücken zu können, sind zwischen dem Bremsmantel-Steuerflansch 16 und dem Kettenradflansch 6b zwei Kugelbahnen 23, 23' angeordnet. Diese Kugelbahnen 23, 23' sind durch jeweils eine Ausnehmung 24, 24' in dem Kettenradflansch 6b und jeweils eine Ausnehmung in dem Bremsmantel-Steuerflansch 16 gebildet, wobei jeder Kugelbahn 23, 23' eine Kugel 25, 25' zugeordnet ist. Die Ausnehmungen 24, 24' an dem Kettenradflansch 6b und dem Bremsmantel-Steuerflansch 16 sind weiter derart zueinander ausgerichtet, dass diese zu einem Ende in Drehrichtung hin ansteigend flacher werden und in einer Endlage mit deren tiefsten Bereichen einander gegenüberliegen. Diese Endlage ist durch Endlageanschläge 26, 26' an dem Kettenradflansch 6b definiert, denen Vorsprünge 27 des Bremsmantel-Steuerflansches 16 zugeordnet sind. Ausgehend von dieser Endlage können die Ausnehmungen 24, 24' der Kugelbahnen 23, 23' daher nur in Richtung der flacher werdenden Enden gegeneinander verschoben werden.

Zwischen dem Kettenradflansch 6b und der Sicherungsmutter 11 ist der Gegenhalter 10 auf der Freilaufachse 13 anordbar, wobei der Gegenhalter 10 eine Führung 28 mit Freilauf aufweist. Die Führung 28 ist korrespondierend zu den Abflachungen 13"' ausgebildet, so dass die Position des Gegenhalters 10 durch die Abflachungen 13"' und die Sicherungsmutter 11 vorgegeben ist. Um die Kraftübertragungseinheit 6 und den Gegenhalter 10 unabhängig voneinander bewegen zu können, ist zwischen Kettenradflansch 6b und Führung 28 ein Axialnadellager 29 vorgesehen.

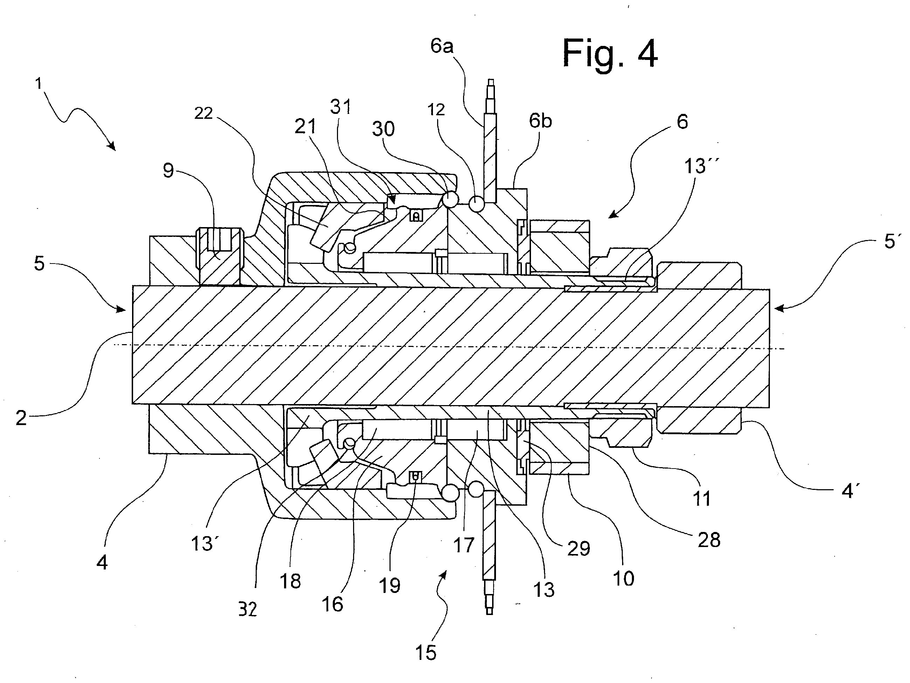

Aus dem in Figur 4 dargestellten Querschnitt der Vorrichtung 1 ist zu entnehmen, wie die einzelnen Teile dieser zusammenwirken. Auf die Antriebsachse 2 ist die Freilaufachse 13 aufgeschoben, wobei deren Lage auf der Antriebsachse 2 durch die beiden Teile des Gehäuses 4, 4' festgelegt ist, die zu beiden Enden der Freilaufachse 13 mit Gewindestiften 9 auf der Freilaufachse 13 festgelegt sind. Auf der Freilaufachse 13 ist die Schaltmechanik 15, bestehend aus der Kraftübertragungseinheit 6 und dem Bremsmantel-Steuerflansch 16, angeordnet, die über die Nadelhülsen 17, 18 auf der Freilaufachse 13 gelagert sind. Weiterhin ist auch der Gegenhalter 10 mit der Führung 28 auf der Freilaufachse 13 gelagert. Sowohl die Schaltmechanik 15 als auch der Gegenhalter 10 sind von dem zweiten Ende der Freilaufachse 13 auf diese aufgeschoben. Mit der an dem Gewinde 13" befestigten Sicherungsmutter 11 sind die Schaltmechanik 15 sowie der Gegenhalter 10 gegen Herunterrutschen von der Freilaufachse 13 gesichert.

Die Kraftübertragungseinheit 6 ist weiterhin zwischen dem Gegenhalter 10 und der Sicherungsmutter 11 auf der einen Seite und dem Getriebegehäuse 4 auf der anderen Seite an einer bestimmten Position auf der Freilaufachse 13 festgelegt, während der Bremsmantel-Steuerflansch 16 in Achsrichtung von dem Kettenradflansch 6b der Kraftübertragungseinheit 6 wegdrückbar ist. Die Festlegung der Kraftübertragungseinheit 6 getriebegehäuseseitig erfolgt über einen in einer Dichtungsnut von Kettenradflansch 6b und Getriebegehäuse 4 geführten Dichtungsring 30.

Wenn das Kettenrad 6a der Vorrichtung 1 in eine erste Drehrichtung, in Achsrichtung vom Getriebegehäuse 4 aus betrachtet entgegengesetzt dem Uhrzeigersinn, bewegt wird, wird das Fahrzeug 3 vorwärts bewegt, wobei die an der Klinkenfeder 19 gehaltenen Klinken 20, 20' in Aufnahmen 31 des Getriebegehäuses 4 eingreifen und das Getriebegehäuse 4 zusammen mit der Antriebsachse 2 mitnehmen, das heißt in Drehrichtung bewegen.

Wird jetzt das Kettenrad 6a in eine entgegengesetzte, zweite Drehrichtung bewegt, greifen die Klinken 20, 20' nicht mehr in die Aufnahmen 31 ein und der Bremsmantel-Steuerflansch 16 wird durch die zwischen Bremsmantel-Steuerflansch 16 und Kettenradflansch 6b ausgebildete Kugelbahn 23, 23' von der Kraftübertragungseinheit 6 weggedrückt. Dies erfolgt, da die Ausnehmungen 24, 24' in den Bereichen in denen die Kugeln 25, 25' gehaltert sind, zu den flacher werdenden Enden hin verschoben werden und die Kugeln 25, 25' den Kettenradflansch 6b und den Bremsmantel-Steuerflansch 16 auseinander drücken. Durch das Wegdrücken des Bremsmantel-Steuerflansches 16 von dem Kettenradflansch 6b wird die zwischen Bremsmantel-Steuerflansch 16, der flanschartigen Verbreiterung 13' der Freilaufachse 13 und dem Getriebegehäuse 4 gehaltene Bremsbacke 22 gegen das innenseitig zumindest abschnittsweise eine Bremstrommel ausbildende Getriebegehäuse 4 gedrückt. Dabei liegt die Bremsbacke 22 auf der konisch geformten Bremsbacken-Auflagefläche 21 auf und wird auf dieser verschoben. Sobald die Bremsbacke 22 innenseitig, an dem Getriebegehäuse 4 fest angreift ist eine kraftschlüssige Verbindung zwischen Bremsbacke 21 und Getriebegehäuse 4 geschaffen, so dass das Fahrzeug 3 zum Stillstand gebracht wird. Wird jetzt weiter Kraft entgegengesetzt der ersten Drehrichtung in die zweite Drehrichtung auf das Kettenrad 6a ausgeübt besteht zwischen Kettenrad 6a, Kettenradflansch 6b, Bremsmantel-Steuerflansch 16, Bremsbacke 22, Getriebegehäuse 4 und Antriebsachse 2 eine starre Verbindung und das Fahrzeug 3 wird durch direkte Kraftübertragung rückwärts bewegt.

Während die Kraftübertragung bei Rückwärtsfahrt direkt erfolgt, wird bei Vorwärtsfahrt nur dann Kraft über die einseitig wirkenden Klinken 20, 20' und das Getriebegehäuse 4 auf die Antriebsachse 2 übertragen, wenn sich die Klinken 20, 20' mit höherer oder gleicher Geschwindigkeit drehen, als das fest mit der Antriebsachse 2 verbundene Getriebegehäuse 4, so dass auch ein Freilauf der Vorrichtung 1 verwirklicht ist.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Vorrichtung (1) zur Änderung von Bewegungsgrößen für ein muskelkraftbetriebenes Fahrzeug (3), insbesondere ein Fahrzeug (3) mit einem Tretkurbelantrieb, aufweisend wenigstens eine antriebsseitige Kraftübertragungseinheit (6) und ein Getriebegehäuse (4, 4'),
**dadurch gekennzeichnet,**
**dass** das Getriebegehäuse (4, 4') eine Achsdurchführung (5, 5') aufweist, mit der dieses konzentrisch auf einer Antriebsachse (2) eines Fahrzeugs (3) festlegbar ist,
**dass** innerhalb des Getriebegehäuses (4, 4') eine Schaltmechanik (15) angeordnet ist,
**dass** die Schaltmechanik (15) um die Achsdurchführung (5, 5') drehbar in dem Getriebegehäuse (4, 4') gelagert ist,
**dass** wenigstens ein Teil der Schaltmechanik (15) in Achsrichtung verschiebbar gelagert ist,
**dass** die antriebsseitige Kraftübertragungseinheit (6) einen Teil der Schaltmechanik (15) darstellt,
**dass** die Schaltmechanik (15) in eine Drehrichtung der Kraftübertragungseinheit (6) um die Achsdurchführung (5, 5') einseitig wirkende Mitnehmer aufweist, und
**dass** in Abhängigkeit von der Drehrichtung der antriebsseitigen Kraftübertragungseinheit (6) um die Achsdurchführung (5, 5') die Mitnehmer in Aufnahmen (30) des Getriebegehäuses (4, 4') eingreifen oder ein Bremsmantel-Steuerflansch (16) von der antriebsseitigen Kraftübertragungseinheit (6) abdrückbar ist, wobei durch Abdrücken des Bremsmantel-Steuerflansches (16) von der Kraftübertragungseinheit (6) eine Bewegungsgrößenänderung des Fahrzeuges (3) erfolgt.

2. Vorrichtung (1) nach Anspruch 1, **dadurch gekennzeichnet, dass** dem Bremsmantel-Steuerflansch (16) wenigstens eine Bremsbacke (22) zugeordnet ist, die beim Abdrücken mit einer Bremsbacken-Auflagefläche (21) des Bremsmantel-Steuerflansches (16) gegen das innenseitig wenigstens abschnittsweise eine Bremstrommel ausbildende Getriebegehäuse (4) gedrückt wird.

3. Vorrichtung (1) nach einem der Ansprüche 1 oder 2, **dadurch gekennzeichnet,**
**dass** die Bremsbacken-Auflagefläche (21) des Bremsmantel-Steuerflansches (16) konisch geformt ist.

4. Vorrichtung (1) nach Anspruch 2, **dadurch gekennzeichnet, dass** die Bremsbacke (22) ringförmig ausgebildet ist und einen Innendurchmesser aufweist, der kleiner ist als die konisch geformte Bremsbacken-Auflagefläche (21) an deren größtem Umfang.

5. Vorrichtung (1) nach einem der Ansprüche 1 bis 4, **dadurch gekennzeichnet,**
**dass** innerhalb des Getriebegehäuses (4, 4') eine Freilaufachse (13) gehaltert ist, die eine zu der Achsdurchführung (5, 5') des Getriebegehäuses (4, 4') fluchtend ausgerichtete Achsdurchführung (14) aufweist.

6. Vorrichtung (1) nach Anspruch 5, **dadurch gekennzeichnet, dass** die Schaltmechanik (15) auf der Freilaufachse (13) gelagert ist.

7. Vorrichtung (1) nach einem der Ansprüche 1 bis 6, **dadurch gekennzeichnet,**
**dass** die Mitnehmer durch Klinken (20, 20') gebildet sind, die mittels wenigstens einer Klinkenfeder (19) der Schaltmechanik (15) befestigt sind, insbesondere an einem äußeren Umfang des Bremsmantel-Steuerflansches (16) befestigt sind.

8. Vorrichtung (1) nach einem der Ansprüche 1 bis 7, **dadurch gekennzeichnet,**
**dass** zwischen der antriebsseitigen Kraftübertragungseinheit (6) und dem Bremsmantel-Steuerflansch (16) an deren einander zugewandten Seitenflächen wenigstens eine Kugelbahn (23, 23') ausgebildet ist.

9. Vorrichtung (1) nach Anspruch 8, **dadurch gekennzeichnet, dass** die Kraftübertragungseinheit (6) und der Bremsmantel-Steuerflansch (16) an deren einander zugewandten Seitenflächen jeweils miteinander korrespondierende Ausnehmungen (24, 24') der Kugelbahn (23, 23') aufweisen.

10. Vorrichtung (1) nach Anspruch 9, **dadurch gekennzeichnet, dass** die Ausnehmungen (24, 24') einer Kugelbahn (23, 23') gegenläufige Steigungen aufweisen, wobei die Ausnehmungen (24, 24') derart zueinander angeordnet sind, dass diese in einer Endlage mit ihren jeweils tiefsten Bereichen einander gegenüberliegen.

11. Vorrichtung (1) nach einem der Ansprüche 8 bis 10, **dadurch gekennzeichnet, dass** an den einander zugewandten Seitenflächen der Kraftübertragungseinheit (6) und des Bremsmantel-Steuerflansches (16) Endlageanschläge (26, 26'), insbesondere für deren Position in Achsdrehrichtung zueinander, ausgebildet sind.

12. Vorrichtung (1) nach Anspruch 5, **dadurch gekennzeichnet, dass** die Freilaufachse (13) an einem in Achsrichtung ersten Ende eine flanschartige Verbreiterung (13') und an einem zweiten, dem ersten Ende entgegengesetzten Ende ein Gewinde (13") mit einer Sicherungsmutter (11) aufweist.

13. Vorrichtung (1) nach Anspruch 5, **dadurch gekennzeichnet, dass** der Freilaufachse (13) ein Gegenhalter (10) zugeordnet ist.

14. Vorrichtung (1) nach Anspruch 12, **dadurch gekennzeichnet, dass** an der flanschartigen Verbreiterung (13') wenigstens eine Führung für die Bremsbacke (22) ausgebildet ist, die diese in Drehrichtung sichert.

15. Vorrichtung (1) nach Anspruch 5, **dadurch gekennzeichnet, dass** das Getriebegehäuse (4, 4') zweiteilig aufgebaut ist, wobei die beiden Teile des Getriebegehäuses (4, 4') jeweils eine Achsdurchführung (5, 5') aufweisen, die beiderseits an die Enden der Achsdurchführung (14) der Freilaufachse (13) anschließen und über Gewindestifte (9, 9', 9") drehfest mit einer in der Achsdurchführung (5, 5', 14) anordbaren Antriebsachse (2) verbindbar sind.

16. Vorrichtung (1) nach einem der Ansprüche 1 bis 15, **dadurch gekennzeichnet, dass** sich die antriebsseitige Kraftübertragungseinheit (6) aus einem Kettenrad (6a) und einem Kettenradflansch (6b) zusammensetzt.

17. Fahrzeug (3), das mit Muskelkraft betrieben wird, insbesondere muskelkraftbetriebenes Fahrzeug (3) mit Tretkurbelantrieb,
**dadurch gekennzeichnet,**
**dass** es eine Vorrichtung (1) nach einem der Ansprüche 1 bis 6 aufweist.
